# EUROPÄISCHE PATENTSCHRIFT

(11) **EP 1 149 139 B1**
(45) Veröffentlichungstag und Bekanntmachung des Hinweises auf die Patenterteilung: **25.02.2004**
(21) Anmeldenummer: 99966911.2
(22) Anmeldetag: 02.12.1999
(51) Int. Cl.: C09K 17/12, C09K 17/46, C04B 28/24, C04B 28/26, E21B 33/138

(54) **MITTEL UND VERFAHREN ZUM ABDICHTEN ODER VERFESTIGEN VON FELS, LOCKERGESTEIN ODER BÖDEN, INSBESONDERE BOHRLÖCHERN**
AGENT AND METHOD FOR SEALING OR CONSOLIDATING ROCK, LOOSE ROCK OR SOILS, ESPECIALLY BORE HOLES
AGENT ET PROCEDE POUR ETANCHEIFIER OU CONSOLIDER DES ROCHERS, DES PIERRES MEUBLES OU DES SOLS, NOTAMMENT DES TROUS DE FORAGE

(30) Priorität: 09.12.1998 DE 19856729
(43) Veröffentlichungstag der Anmeldung: 31.10.2001
(73) Patentinhaber: Cognis Deutschland GmbH & Co. KG, 40589 Düsseldorf (DE)
(72) Erfinder: LANGE, Ilona, D-40764 Langenfeld (DE); BREUER, Wolfgang, D-41352 Korschenbroich (DE); HEROLD, Claus-Peter, D-40822 Mettmann (DE); VON TAPAVICZA, Stephan, D-40699 Erkrath (DE); MILL, Dark, D-31535 Neustadt (DE)
(86) Internationale Anmeldenummer: PCT/EP1999/009404
(87) Internationale Veröffentlichungsnummer: WO 2000/034412

(56) Entgegenhaltungen:
- EP-A- 0 530 600
- FR-A- 2 580 659
- US-A- 4 043 830
- US-A- 4 056 937
- US-A- 4 430 369
- US-A- 4 596 838

## Beschreibung

Die vorliegende Erfindung betrifft ein Mittel sowie ein Verfahren zum Abdichten oder Verfestigen von Fels, Lockergestein oder Böden und die Verwendung bestimmter Härtestabilisatoren enthaltender Kieselsole zu diesem Zweck.

Die Verfestigung oder Abdichtung von Fels, Lockergestein oder Böden ist ein regelmäßig notwendige Maßnahme im Bereich der Tiefbautechnik, z.B. zur Gebäudeunterfangung, zum Abdichten von Baugruben oder Deponien, im Tunnelbau und Kanalbau und insbesondere beim Erdreichaufschluß, wie der Erbohrung von Erdöl- oder Erdgaslagerstätten. Im letzten Fall steht das Abdichten von Bohrlöchern im Vordergrund. Bohrlöcher werden bis zum Erreichen einer Erdöl- Erdgas, oder im Brunnenbau, Wasser führenden Formation in das Erdreich getrieben. Das Loch wird durch einen Zementmantel gegen die Formation stabilisiert. Dieser Zementmantel wird im Bereich des Bohrlochgrunds aufgebrochen, so daß das zu fördernde Gut möglichst ungehindert aus der Formation in das Bohrloch übergehen kann. Neben Erdöl- oder Erdgas dringt aber auch Wasser in das Bohrloch ein welches über aufwendige Verfahren von dem gewünschten Fördergut abgetrennt werden muß. Man ist daher bemüht, das Eindringen von Wasser weitestmöglich zu verringern oder zu vermeiden und dichtet daher die wasserführenden Bereiche der Formation durch geeignete Bindemittel ab. Aber auch beim Schutz von agrarisch genutzten Flächen gegen Wind- oder Wassererosion ist die Verfestigung bzw. Abdichtung eine übliche Maßnahme.

In der Regel werden in der Tiefbautechnik Bindemittel wie Zement, Bitumen, Calciumsalze oder Wasserglas verwendet. Zement hat allerdings den Nachteil, daß die Teilchen häufig nicht klein genug sind, um auch in feine Risse oder Poren eindringen zu können, so daß ein unzureichender Abdicht- bzw. Verfestigungseffekt zu beobachten ist. Auch bei der Verwendung von Wassergläsern, bekanntlich eine wäßrige Lösung von Natriumsilicat, oder von Mikrokieselsäuren, eine wäßrige Dispersion von amorphem Siliciumdioxid, beobachtet man nicht immer eine Abdichtung im gewünschten Umfang. Daher schlägt die EP 530 600 vor, Kieselsäuresole zur Abdichtung oder Verfestigung zu verwenden. Es handelt sich dabei um kolloidale Lösungen von amorphem Siliciumdioxid, welches eine Partikelgröße im Bereich von 7 bis 50 nm aufweist. Diese Kieselsäuresole vergelen in Gegenwart bestimmter Elektrolyte, beziehungsweise bei Veränderungen des pH-Werts der wäßrigen Sole. Das Gel wird durch Vernetzung der SiO₂-Einheiten viskoser bis eine vollständige Verfestigung eingetreten ist. Elektrolyte, die eine Vergelung auslösen, sind in der Regel in dem zu verfestigenden oder abzudichtenden Material vorhanden. Es handelt sich dabei vorzugsweise um Salze des Aluminiums, Eisens, Calciums oder Magnesiums. Die **EP 0 530 600 A1** schlägt aber vor, Kieselsole in Kombination mit einem Calcium-Donator einzusetzen, um eine möglichst schnelle Überführung des Sols in das Gel zu erreichen.

Nun hat die Anmelderin beobachtet, daß die Verwendung von Kieselsolen überraschenderweise nicht immer zu den gewünschten Abdicht- bzw. Verfestigungseffekten führt. Dies zeigt sich insbesondere bei der Abdichtung von Bohrlöchern gegen eindringendes Formationswasser. Dabei tritt nach Beobachtungen der Anmelderin häufig eine Freiwasserphase auf, wobei dies ist ein Indiz dafür ist, daß keine Vergelung und somit Abdichtung stattgefunden hat. Ohne an eine bestimmte Theorie gebunden zu sein, geht die Anmelderin daher davon aus, daß, im Gegensatz zur Lehre der **EP 0 530 600 A1** die Bildung von Erdalkalisilikaten und insbesondere von Calciumsilikat den Vergelungsprozess inhibieren können. Eine Aufgabe der vorliegenden Erfindung bestand daher darin, ein Verfahren zur Abdichtung oder Verfestigung von, das auch in Gegenwart von Erdalkaliionen-haltigem Wasser durchgeführt werden kann.
Bei der Abdichtung von Bohrlöchern ist es außerdem häufig nicht erwünscht, eine schnelle Verfestigung des Bindemittels zu erzielen. Das Bindemittel wird über ein geeignetes Transportrohr unter Druck an den Bohrlochgrund transportiert und dort in die Formation gepreßt. Eine schnelle Verfestigung des Bindemittel würde dazu führen, daß das Mittel auch im Rohr selbst vergelt, was natürlich nicht erwünscht ist. Vielmehr soll der Vergelungseffekt soweit verzögert werden, daß durch Nachspülen, z.B. mit Wasser, das gesamte Bindemittel in die Formation gepreßt wird und die Vergelung und Verfestigung somit nur an den gewünschten Stellen erfolgt. Somit bestand eine weitere Aufgabe der vorliegenden Erfindung darin, ein Verfahren zur zeitlich verzögerten Verfestigung oder Abdichtung von Fels, Lockergestein oder Böden bereitzustellen.

Es wurde nun überraschend gefunden, daß eine Mischung aus wäßrigem Kieselsol und bestimmten Inhibitoren für Ca²⁺-Ionen die oben gestellten Aufgaben löst.

Gegenstand der vorliegenden Erfindung ist in einer ersten Ausführungsform ein wäßriges Mittel zum Abdichten oder Verfestigen von Fels, Lockergestein oder Böden, welche sich in Kontakt mit Ca²⁺-Ionen enthaltendem Wasser befinden, wobei das Mittel 2 bis 40 Gew.-% SiO₂ (Trockensubstanz, bezogen auf das Mittel) in Form eines wäßrigen Kieselsols und zusätzlich Härtestabilisatoren aus der Klasse der anorganischen Polyphosphate, der Phosphonsäuren, der Aminoethylenphosphonsäuren, der Phosphorsäureester, der Phosphonocarbonsäuren sowie von Polycarbonsäuren oder Mischungen dieser Substanzen in Konzentrationen von 0,01 bis 400 ppm enthält.

Die erfindungsgemäßen Mittel eigenen sich generell sowohl zur Verfestigung als auch zur Abdichtung von jeder Art Fels, Lockergestein oder Böden, die in Kontakt mit Ca²⁺-Ionen haltigem Wasser stehen. Typische Einsatzgebiete sind der Tiefbau, insbesondere im Tunnel- und Brunnenbau und beim Erdreichaufschluß, insbesondere bei der Abdichtung von Bohrlöchern, genauer Bohrlochwänden, gegen eindringendes Formationswasser.

Die erfmdungsgemäßen Mittel enthalten neben Wasser als Trägerflüssigkeit Kieselsole, die amorphes SiO₂ in Mengen von 2 bis 60 Gew.-%, berechnet als Trockenmasse und bezogen auf das Sol, enthalten. Im Rahmen der erfindungsgemäßen Mittel werden aber Kieselsole mit 25 bis 50 Gew.-% amorphem SiO₂ bevorzugt. Das amorphe SiO₂ liegt in Form untereinander unvernetzter, kugelförmiger Einzelteilchen vor, die an der Oberfläche durch Hydroxylgruppen stabilisiert sind. Der durchschnittliche Partikeldurchmesser liegt im Bereich von 1 bis 150 nm, vorzugsweise im Bereich von 5 bis 70 und insbesondere im Bereich von 5 bis 40 nm. Die spezifische Oberfläche der Kieselsole liegt im Bereich von 50 bis 700 m²/g gemessen nach BET-Methode. Aufgrund der kolloidalen Verteilung der Teilchen beobachtet man bei Kieselsolen kein Sedimentation der Teilchen. Die Sole können daher jahrelang gelagert werden. In der Regle werden wäßrige Kieselsole verwendet. Es ist aber auch möglich, amorphes SiO₂ in anderen Lösungsmitteln, beispielsweise Aceton oder kurzkettigen organische Alkohole, wie Methanol, Ethanol oder Propanol, in Sole zu überführen (vergl. **Ullmanns Encyklopädie der Technischen Chemie, 4. Auflage, Band 21, Seiten 456 bis 463, Weinheim 1982).** Die erfindungsgemäßen Mittel enthalten aber ausschließlich wäßrige Kieselsole.

Die erfindungsgemäßen Mittel enthalten insgesamt, also unter Einbeziehung des Wasseranteils der Kieselsole, zwischen 60 und 98 Gew.-% und insbesondere zwischen 60 und 80 Gew.-% Wasser, das vorzugsweise nur geringe Anteile an Elektrolyten, beispielsweise zwischen 0,001 und 0,1 Gew.-% enthält. Vorzugsweise ist das Wasser frei von Elektrolyten. Unter Elektrolyten werden hier insbesondere Kationen ein- und zweiwertiger Alkali- und Erdalkalionen, also Na⁺, K⁺, Ca²⁺ und Mg²⁺-Ionen verstanden. Wäßrige Kieselsole der oben beschriebenen Art sind in den Mittel zu 20 bis 60 Gew.-% enthalten. Zu der Mischung aus Kieselsol und Wasser werden erfindungsgemäß sogenannte Härtestabilisatoren in Konzentrationen von 0,01 bis 400 ppm gegeben. Bei Härtestabilisatoren handelt es sich um Verbindungen, die in der Lage sind in unterstöchiometrischen Mengen die bekannt dafür sind, die Ausfällung von Härtebildnern aus übersättigten wäßrigen Lösungen vollständig und dauerhaft zu verhindern. Insofern war es überraschend, daß der Zusatz dieser Verbindungen nur zu einer verzögerten Vergelung der Kieselsole führt und diese nicht dauerhaft unterbindet. Als Härtebildner fungieren hauptsächlich Erdalkali-Ionen, insbesondere Calcium- und Magnesium-Ionen ("Threshold-Effekt"). Einzelheiten finden sich in **Römpps Chemie Lexikon, 9. Auflage, Band 6,1994, auf den Seiten 5000 bis 5002.**

In den erfindungsgemäßen Mitteln sind als Härtestabilisatoren Verbindungen aus der Klasse der anorganischen Polyphosphate, der Phosphonsäuren, der Aminoethylenphosphonsäuren, der Phosphorsäureester, der Phosphonocarbonsäuren sowie von Polycarbonsäuren oder Mischungen enthalten. Auch die Salze dieser Verbindungen sind geeignet. Besonders bevorzugt sind solche Mittel, die Härtestabilisatoren aus der Gruppe Aminotris-(methylenphosphonsäure), 1-Hydroxyethan-1,1-diphosphonsäure, Phosphonobutan-tricarbonsäure, Polyacrylsäure, Polyasparaginsäure, Polymaleinsäure oder deren Derivate, oder Mischungen dieser Substanzen enthalten. Besonders bevorzugt sind solche Mittel, die als Härtestabilisatoren Tetrakis-[(Phosphonomethyl)-imino]-bis-[2.1-ethandiyl-nitrido-bis-methylen]-phosphonsäure und/oder dessen Salze enthalten.

Bevorzugte Mischungen dieser Stabilisatoren enthalten beispielsweise 1-Hydroxyethan-1,1-diphosphonsäure Natrium-Salz und Polyacrylsäure oder 1-Hydroxyethan-1,1-diphosphonsäure Natrium-Salz, Aminotris-(methylenphosphonsäure) und Polyacrylsäure. Die Einsatzkonzentration der Härtestabilisatoren liegt zwischen 0,01 und 400 ppm und insbesondere im Bereich von 0,1 bis 200 ppm, und insbesondere zwischen 1 und 100 ppm, jeweils bezogen auf Aktivsubstanz Härtestabilisator.

Eine weitere Ausführungsform der vorliegenden Erfindung betrifft ein Verfahren zum Abdichten oder Verfestigen von Fels, Lockergestein oder Böden, welche sich im Kontakt mit Ca²⁺-Ionen enthaltendem Wasser befinden, indem man das zu verfestigende oder abzudichtende Material mit einer wäßriges Kieselsol enthaltenden Lösung sowie Härtestabilisatoren aus der Klasse der anorganischen Polyphosphate, der Phosphonsäuren, der Aminoethylenphosphonsäuren, der Phosphorsäureester, der Phosphonocarbonsäuren sowie von Polycarbonsäuren oder Mischungen dieser Substanzen in Kontakt bringt.

Vorzugsweise werden dazu wäßrige Kieselsole verwendet, die zu 20 bis 60 Gew.-% SiO₂ (Trockensubstanz, bezogen auf das wäßrige Sol) enthalten. In der Regel wird das Mittel dazu unter Druck in das abzudichtende oder zu verfestigende Material gepreßt. Gleichzeitig oder zeitversetzt nach der Behandlung mit dem Kieselsol erfolgt dann der Zusatz der Härtestabilisatoren. Dabei werden vorzugsweise solche Mengen eingesetzt, daß die Konzentration der Stabilisatoren, bezogen auf die wäßrige Kieselsollösung, im Bereich von 0,01 bis 400 ppm, vorzugsweise 0,1 bis 200 und insbesondere von 1 bis 100 ppm liegen.

Besonders bevorzugt ist es, das erfindungsgemäBe Verfahren zum Abdichten von unterirdischen Formationen, insbesondere von Bohrlöchern zu verwenden. Die Kieselsol/Wasser/Stabilisatoren-Mischung wird dazu mit geeigneten Pumpen durch das Förderrohr an die Bohrlochsole gepumpt, wobei ein solcher Druck ausgeübt wird, daß das Mittel möglichst tief in die Formation eindringt. Anschließend wird mit Wasser nachgespült, bis das Mittel vollständig aus dem Rohr entfernt worden ist. In diesem Zusammenhang zeigt sich ein weitere Vorteil des erfindungsgemäßen Verfahrens, da das verwendete Mittel erst mit einer gewissen zeitlichen Verzögerung vergelt. Vorzugsweise verfestigt sich das Mittel unter den Temperatur-, pH- und Druckverhältnissen an der Bohrlochsole erst 30 bis 60 Minuten nachdem es mit dem zu verfestigenden oder abzudichtenden Material und damit auch mit dem Ca²⁺ Ionen-haltigen Wasser in Kontakt gebracht worden ist. Die Temperaturen an der Bohrlochsole liegen üblicherweise im Bereich von 30 bis 200 °C, in Abhängigkeit von der Täufe. Der Druck beträgt, ebenfalls tiefenabhängig, typischerweise zwischen 10 und 500 bar.

Die jeweils geeignete Konzentration der Stabilisatoren kann in Abhängigkeit von der Ca²⁺-lonenkonzentration des Wassers, mit dem sich das zu verfestigende oder abzudichtende Material in Kontakt befindet, gewählt werden. Es hat sich gezeigt, daß das in den erfindungsgemäßen Mitteln die Härtestabilisatoren vorzugsweise in solchen Mengen enthalten sein sollten, daß, bezogen auf ein vorgegebenes Volumen, das Gewichtsverhältnis von Ca²⁺-Ionen zu den Härtestabilisatoren im Bereich von 0,5 bis 5,0 liegt. Die Menge an Ca²⁺-Ionen läßt sich dabei problemlos über die Bestimmung der Wasserhärte errechnen.

Das Wasser, das mit dem zu verfestigenden oder abzudichtenden Material in Kontakt steht, weist in der Regel einen Gehalt an Ca²⁺-Ionen von größer 2 mmol/l vorzugsweise größer 4 mmol/l auf. Typische Ca²⁺-Konzentrationen liegen im Bereich von 3 bis 8 mmol/l. Der pH-Wert des Formationswassers liegt in der Regel im sauren bis schwach alkalischen Bereich, also zwischen 6 und 9. Es hat sich gezeigt, daß eine Verringerung des pH-Wertes auf Werte von 2 bis 5 generell die Vergelung verhindern kann. Es ist daher bevorzugt, daß erfindungsgemäße Verfahren bei pH-Werten zwischen 6 und 9 durchzuführen bzw. die erfindungsgemäßen Mittel durch Zusatz von Säuren oder Basen so zu formulieren, daß ihr pH-Wert in dem genannten Bereich liegt.

Weiterhin wird die Verwendung von Mitteln gemäß der obigen Beschreibung zum Verfestigen oder Abdichten von Fels, Lockergestein oder Böden welche sich in Kontakt mit Ca²⁺-Ionen enthaltendem Wasser befinden, beansprucht.

### Beispiele

Die Wirksamkeit des erfindungsgemäßen Verfahrens wurden wie folgt bestimmt: 11 g eines Kieselsols (Köstrosol® 0830 der Firma Chemiewerk Bad Köstritz) wurden mit 40 g vollentsaltztem Wassers vermischt und dem Sol anschließend Härtestabilisatoren in unterschiedlichen Mengen zugegeben. Zu dieser Mischung wurde dann zwischen 0,7 und 1,0 ml einer Calciumchloridlösung (Konzentration an Ca²⁺-Ionen: 28200 ppm) getropft und anschließend für 15 Minuten auf 100 °C erwärmt. Das Gefäß wurde zum Abkühlen ohne Rühren stehen gelassen. Nach 30 Minuten wurde visuell der Vergelungsgrad bestimmt.

Es wurde folgende Bewertung vorgenommen:

| | |
|---|---|
| zu 100 % fest | ++ |
| zu 80 bis fast 100 % fest | + |
| weniger als 80 % fest | - |

Es wurden folgende Härtestabilisatoren untersucht:
- A:: 1-Hydroxyethan-1,1-diphosphonsäure
- B:: Amino-tris-(methylenphosphonsäure)
- C:: 1-Hydroxyethan-1,1-diphosphonsäure Di-Natriumsalz
- D:: Mischung aus B und C sowie Polyacrylsäure

Die Stabilisatoren wurden in Form handelsüblicher, wäßriger Lösungen eingesetzt (alles Produkte der Fa. Henkel):
- A:: 60 Gew.-% Aktivsubstanz (Turpinal© SL)
- B:: 50 Gew.-% Aktivsubstanz (Turpinal© D2)
- C:: 10 Gew.% Aktivsubstanz (Turpinal© -2-NZ)
- D:: 30 Gew.-% Aktivsubstanz (Fostex© 617 B)

Die Angaben der Tabelle 1 beziehen sich auf Aktivsubstanz.

Die Ergebnisse der Versuche sind in **Tabelle 1** wiedergegeben.

**Tabelle 1**

| Nr. | Stabilisator | Stabilisatorkonzentration [ppm] | CaCl₂-Lösung [ml] | Ca²⁺-Gehalt in der Lösung [Gew..%] | Gewichtsverhältnis Ca²⁺/Stabilisator [g/g] | Vergelung nach 30 Minuten |
|---|---|---|---|---|---|---|
| 1 | A | 0,1 | 0,8 | 0,04 | 0,7 | ++ |
| 2 | A | 0,2 | 0,8 | 0,04 | 1,0 | ++ |
| 3 | B | 0,3 | 0,8 | 0,04 | 1,4 | + |
| 4 | B | 0,3 | 0,7 | 0,04 | 2,0 | ++ |
| 5 | C | 0,7 | 1,0 | 0,06 | 1,3 | ++ |
| 6 | C | 0,7 | 1,0 | 0,06 | 1,5 | + |
| 7 | D | 0,7 | 1,0 | 0,06 | 4,0 | ++ |

Es wurde weiterhin Versuche bei erhöhtem Druck und Temperatur durchgeführt, um die Bedingungen an der Bohrlochsole zu simulieren. Jeweils 5 g eines 50 Gew.-%igen wäßrigen Kieselsols wurden mit 45 g Wasser verdünnt und anschließend durch Zugabe einer CaCl₂-Lösung (0,04 Gew.-% Ca²⁺) ein bestimmtes Gewichtsverhältnis Ca²⁺/SiO₂ eingestellt. Das System wurde dann in einem Autoklaven bei 10 bar Druck (Stickstoffatmosphäre) 30 Minuten auf 150 °C erwärmt und dann zwei Stunden bei diesen Bedingungen belassen. Die Ergebnisse der visuellen Begutachtung der Lösungen sind in der **Tabelle 2** wiedergegeben:

**Tabelle 2**

| Lösung | Ca/SiO₂ [Gew.-%] | Effekt |
|---|---|---|
| 8 | 0,005 | dünnflüssig |
| 9 | 0,010 | leichte Vergelung |
| 10 | 0,020 | Gelbildung |
| 11 | 0,030 | Gelbildung |

Es wurden nun unter den angegebenen Bedingungen unterschiedliche Mengen des **Stabilisators D** der Lösung 10 zugesetzt. Es zeigte sich, daß bei Zusatz von 100 und 200 ppm Stabilisator eine zeitverzögerte Vergelung nach drei Stunden eintrat. Bei höheren Konzentrationen war keine Vergelung mehr zu beobachten. Es zeigt sich, daß auch bei erhöhtem Druck und Temperatur das erfindungsgemäße Verfahren zu einer gewünschten zeitverzögerten Vergelung der Kieselsol-Lösungen führt.

## Patentansprüche

1. Wäßriges Mittel zum Abdichten oder Verfestigen von Fels, Lockergestein oder Böden, welche sich in Kontakt mit Ca²⁺-Ionen enthaltendem Wasser befinden, wobei das Mittel 2 bis 40 Gew.-% SiO₂ (Trockensubstanz, bezogen auf das Mittel) in Form eines wäßrigen Kieselsols) enthält, **dadurch gekennzeichnet, daß** es Härtestabilisatoren aus der Klasse der anorganischen Polyphosphate, der Phosphonsäuren, der Aminoethylenphosphonsäuren, der Phosphorsäureester, der Phosphonocarbonsäuren sowie von Polycarbonsäuren oder Mischungen dieser Substanzen in Konzentrationen von 0,01 bis 400 ppm enthält

2. Mittel nach Anspruch 1, **dadurch gekennzeichnet, daß** die Härtestabilisatoren ausgewählt sind aus der Gruppe Aminotris-(methylenphosphonsäure), 1-Hydroxyethan-1,1-diphosphonsäure, Phosphonobutan-tricarbonsäure, Polyacrylsäure oder Mischungen dieser Substanzen.

3. Mittel nach einem der Ansprüche 1 oder 2, **dadurch gekennzeichnet, daß** es die Härtestabilisatoren in Konzentrationen von 0, 1 bis 200 ppm und vorzugsweise 1 bis 100 ppm enthält.

4. Verfahren zum Abdichten oder Verfestigen von Fels, Lockergestein oder Böden, welche sich im Kontakt mit Ca²⁺-Ionen enthaltendem Wasser befinden, indem man das zu verfestigende oder abzudichtende Material mit einer wäßriges Kieselsol enthaltenden Lösung sowie Härtestabilisatoren aus der Klasse der anorganischen Polyphosphate, der Phosphonsäuren, der Aminoethylenphosphonsäuren, der Phosphorsäureester, der Phosphonocarbonsäuren sowie von Polycarbonsäuren oder Mischungen dieser Substanzen in Kontakt bringt.

5. Verfahren nach Anspruch 4, **dadurch gekennzeichnet, daß** wäßrige Kieselsole verwendet werden, die 20 bis 60 Gew.-% SiO₂, vorzugsweise 25 bis 50 Gew.-% SiO₂ (jeweils Trockensubstanz, bezogen auf das wäßrige Sol) enthalten.

6. Verfahren nach Anspruch 4 oder 5, **dadurch gekennzeichnet, daß** die Härtebildner in solchen Mengen zugesetzt werden, daß deren Konzentration in der wäßrigen Kieselsol-Lösung zwischen 0,01 und 400 ppm, vorzugsweise 0,1 bis 200 und insbesondere 1 bis 100 ppm beträgt.

7. Verfahren nach einem der Ansprüche 4 bis 6, **dadurch gekennzeichnet, daß** sich das zu verfestigende oder abzudichtende Material in Kontakt mit Wasser befindet, das eine Ca²⁺-Ionen-Konzentration von mehr als 2 mmol/l aufweist.

8. Verfahren nach einem der Ansprüche 4 bis 7, **dadurch gekennzeichnet, daß** es zur Abdichtung unterirdischer Formationen, vorzugsweise von Bohrlöchern, verwendet wird.

9. Verfahren nach einem der Ansprüche 4 bis 8, **dadurch gekennzeichnet, daß** der Abdicht- oder Verfestigungseffekt 30 bis 60 Minuten nach Inkontaktbringen des Mittels mit dem zu verfestigenden oder abzudichtenden Material eintritt.

10. Verwendung von Mitteln gemäß der Ansprüche 1 bis 3 zum Abdichten oder Verfestigen von Fels, Lockergestein oder Böden welche sich in Kontakt mit Ca²⁺-Ionen enthaltendem Wasser befinden.

## Claims

1. A water-based composition for sealing or consolidating rock, mantle rock or soils in contact with water containing Ca²⁺ ions, the composition containing 2 to 40% by weight of SiO₂ (dry matter, based on the composition) in the form of an aqueous silica sol, **characterized in that** it contains hardness stabilizers from the class of inorganic polyphosphates, phosphonic acids, aminoethylene phosphonic acids, phosphoric acid esters, phosphonocarboxylic acids and polycarboxylic acids or mixtures of these substances in concentrations of 0.01 to 400 ppm.

2. A composition as claimed in claim 1, **characterized in that** the hardness stabilizers are selected from the group consisting of aminotris(methylenephosphonic acid), 1-hydroxyethane-1,1-diphosphonic acid, phosphonobutane tricarboxylic acid, polyacrylic acid or mixtures of these compounds.

3. A composition as claimed in claim 1 or 2, **characterized in that** it contains the hardness stabilizers in concentrations of 0.1 to 200 ppm and preferably in concentrations of 1 to 100 ppm.

4. A process for sealing or consolidating rock, mantle rock or soils in contact with water containing Ca²⁺ ions, in which the material to be consolidated or sealed is contacted with a solution containing aqueous silica sol and hardness stabilizers from the class of inorganic polyphosphates, phosphonic acids, aminoethylene phosphonic acids, phosphoric acid esters, phosphonocarboxylic acids and polycarboxylic acids or mixtures of these substances.

5. A process as claimed in claim 4, **characterized in that** aqueous silica sols containing 20 to 60% by weight of SiO₂ and preferably 25 to 50% by weight of SiO₂ (dry matter, based on the aqueous sol) are used.

6. A process as claimed in claim 4 or 5, **characterized in that** the hardness ions are added in such quantities that their concentration in the aqueous silica sol solution is between 0.01 and 400 ppm, preferably between 0.1 and 200 ppm and more particularly between 1 and 100 ppm.

7. A process as claimed in any of claims 4 to 6, **characterized in that** the material to be consolidated or sealed is in contact with water having a concentration of Ca²⁺ ions of more than 2 mmol/l

8. A process as claimed in any of claims 4 to 7, **characterized in that** it is used to seal underground formations, preferably wells.

9. A process as claimed in any of claims 4 to 8, **characterized in that** the consolidating or sealing effect begins 30 to 60 minutes after contacting of the composition with the material to be consolidated or sealed.

10. The use of the compositions claimed in any of claims 1 to 3 for sealing or consolidating rock, mantle rock or soils in contact with water containing Ca²⁺ ions.

## Revendications

1. Composition aqueuse pour l'étanchéification ou la solidification de roches, de roches friables ou de sols, qui se trouvent en contact avec de l'eau contenant des ions Ca²⁺, la composition contenant de 2 à 40 % en poids de SiO₂ (substance sèche, rapporté à la composition), sous forme d'une solution (sol) de silice aqueux,
**caractérisée en ce qu'**
elle renferme des stabilisateurs de dureté choisis dans la classe des polyphosphates anorganiques, des acides phosphoniques, des acides aminoéthylènephosphoniques, des esters d'acide phosphonique, des acides phosphonocarboxylique, ainsi que des acides polycarboxyliques ou des mélanges de ces substances à des concentrations allant de 0,01 à 400 ppm.

2. Composition selon la revendication 1,
**caractérisée en ce que**
les stabilisateurs de dureté sont choisis dans le groupe de l'acide aminotris-(méthylènephosphonique), l'acide 1-hydroxyéthane 1,1-diphosphonique, l'acide phosphonobutane tricarboxylique, l'acide polyacrylique ou des mélanges de ces substances.

3. Composition selon l'une des revendications 1 ou 2,
**caractérisée en ce qu'**
elle renferme les agents de stabilisateurs de la dureté à des concentrations allant de 0,1 à 200 ppm et de préférence de 1 à 100 ppm.

4. Procédé d'étanchéification ou de solidification de roches, de roches friables ou de sols, qui se trouvent en contact avec de l'eau contenant des ions Ca²⁺, selon lequel on met en contact le produit à solidifier ou à étanchéifier avec une solution contenant un sol aqueux de silice ainsi que des stabilisateurs de dureté choisis dans la classe des polyphosphates anorganiques , des acides phosphoniques, des acides aminoéthylènephosphoniques, des esters d'acide phosphonique, des acides phosphonocarboxyliques ainsi que des acides polycarboxyliques ou des mélanges de ces substances.

5. Procédé selon la revendication 4,
**caractérisé en ce qu'**
on utilise des sols aqueux de silice qui renferment de 20 à 60 % en poids de SiO₂, de préférence de 25 à 50 % en poids de SiO₂ (à chaque fois la substance sèche, rapporté au sol aqueux).

6. Procédé selon la revendication 4 ou la revendication 5,
**caractérisé en ce qu'**
on ajoute les formateurs de dureté en de telles quantités que leur concentration dans la solution de sol de silice aqueux, est entre 0,01 et 400 ppm, de préférence 0,1 à 200 et en particulier à 1 à 100 ppm.

7. Procédé selon l'une des revendications 4 à 6,
**caractérisé en ce que**
le produit à solidifier ou à étanchéifier qui se trouve en contact avec l'eau, possède une concentration en ions Ca²⁺ supérieure à 2 mmol/l.

8. Procédé selon l'une des revendications 4 à 7,
**caractérisé en ce qu'**
on l'utilise pour l'étanchéification de formations souterraines, de préférence de trous de forage.

9. Procédé selon l'une des revendications 4 à 8,
**caractérisé en ce que**
l'effet d'étanchéification ou de solidification survient de 30 à 60 minutes après mise en contact de la composition avec le produit à solidifier ou à étanchéifier.

10. Utilisation de compositions conformément aux revendications 1 à 3, en vue de l'étanchéification ou de la solidification de roches, de roches friables ou de sols, qui se trouvent en contact avec de l'eau contenant des ions Ca²⁺.
